# EUROPEAN PATENT SPECIFICATION

(11) **EP 3 686 547 B1**
(45) Date of publication and mention of the grant of the patent: **02.08.2023**
(21) Application number: 19153359.5
(22) Date of filing: 23.01.2019
(51) Int. Cl.: G01B 11/06, G01B 9/02091

(54) **APPARATUS FOR DETERMINING A LAYER THICKNESS OF A PLURALITY OF LAYERS ARRANGED ON A BODY**
VORRICHTUNG ZUR BESTIMMUNG EINER SCHICHTDICKE MEHRERER AUF EINEM KÖRPER ANGEORDNETER SCHICHTEN
APPAREIL POUR DÉTERMINER L'ÉPAISSEUR D'UNE COUCHE D'UNE PLURALITÉ DE COUCHES DISPOSÉES SUR UN CORPS

(43) Date of publication of application: 29.07.2020
(73) Proprietor: Helmut Fischer GmbH Institut für Elektronik und Messtechnik., 71069 Sindelfingen (DE)
(72) Inventor: Mästle, Rüdiger, 71032 Böblingen (DE); Anklamm, Lars-Christian, 10407 Berlin (DE)
(74) Representative: Mammel und Maser Patentanwälte PartG mbB

(56) References cited:
- US-A1- 2018 256 065
- NORIKAZU FUSE ET AL: "Evaluation of Applicability of Noncontact Analysis Methods to Detect Rust Regions in Coated Steel Plates", IEEE TRANSACTIONS ON TERAHERTZ SCIENCE AND TECHNOLOGY, IEEE, PISCATAWAY, NJ, USA, vol. 2, no. 2, 1 March 2012 (2012-03-01), pages 242-249, XP011428756, ISSN: 2156-342X, DOI: 10.1109/TTHZ.2011.2178932
- YASUI T ET AL: "TERAHERTZ PAINTMETER FOR NONCONTACT MONITORING OF THICKNESS AND DRYING PROGRESS IN PAINT FILM", APPLIED OPTICS, OPTICAL SOCIETY OF AMERICA, WASHINGTON, DC; US, vol. 44, no. 32, 10 November 2005 (2005-11-10), pages 6849-6856, XP001235533, ISSN: 0003-6935, DOI: 10.1364/AO.44.006849
- LIN HUNGYEN ET AL: "Studying the pharmaceutical film coating process with terahertz sensing, optical coherence tomography and numerical modelling", 2016 41ST INTERNATIONAL CONFERENCE ON INFRARED, MILLIMETER, AND TERAHERTZ WAVES (IRMMW-THZ), IEEE, 25 September 2016 (2016-09-25), pages 1-2, XP033010304, DOI: 10.1109/IRMMW-THZ.2016.7758595 [retrieved on 2016-11-28]
- JAKOB M.A. MAURITZ ET AL: "Imaging pharmaceutical tablets with optical coherence tomography", JOURNAL OF PHARMACEUTICAL SCIENCES, vol. 99, no. 1, 1 January 2010 (2010-01-01), pages 385-391, XP055164487, ISSN: 0022-3549, DOI: 10.1002/jps.21844

## Description

### Field of the invention

The disclosure relates to an apparatus for determining a layer thickness of a plurality of layers arranged on a body.

The disclosure further relates to a method of determining a layer thickness of a plurality of layers arranged on a body, particularly to a method of operating an apparatus for determining a layer thickness of a plurality of layers arranged on a body.

NORIKAZU FUSE ET AL: "Evaluation of Applicability of Noncontact Analysis Methods to Detect Rust Regions in Coated Steel Plates", IEEE TRANSACTIONS ON TERAHERTZ SCIENCE AND TECHNOLOGY, IEEE, PISCATAWAY, NJ, USA, vol. 2, no. 2, 1 March 2012 (2012-03-01), pages 242-249, XP011428756, ISSN: 2156-342X, DOI: 10.1109/TTHZ.2011.2178932 discloses detection of rust regions in coated steel plates.

YASUI T ET AL: "TERAHERTZ PAINTMETER FOR NONCONTACT MONITORING OF THICKNESS AND DRYING PROGRESS IN PAINT FILM", APPLIED OPTICS, OPTICAL SOCIETY OF AMERICA, WASHINGTON, DC; US, vol. 44, no. 32, 10 November 2005 (2005-11-10), pages 6849-6856, -XP001235533, ISSN: 0003-6935, DOI: 10.1364/A0.44.006849 discloses a terahertz paintmeter for noncontact monitoring of thickness and drying progress in paint film.

LIN HUNGYEN ET Al: "Studying the pharmaceutical film coating process with terahertz sensing, optical coherence tomography and numerical modelling", 2016 41ST INTERNATIONAL CONFERENCE ON INFRARED, MILLIMETER, AND TERAHERTZ WAVES (IRMMW-THZ), IEEE, 25 September 2016 (2016-09-25), pages 1-2,XP033010304, DOI: 10.1109/IRMMW-THZ.2016.7758595 discloses studying the pharmaceutical film coating process with terahertz sensing. JAKOB M.A. MAURITZ ET AL: "Imaging pharmaceutical tablets with optical coherence tomography", JOURNAL OF PHARMACEUTICAL SCIENCES, vol. 99, no. 1, 1 January 2010 (2010-01-01), pages 385-391, XP055164487, ISSN: 0022-3549, DOI: 10.1002/jps.21844 discloses imaging pharmaceutical tablets with optical coherence tomography.

US 2018/256065 A1 discloses a method and an apparatus for diagnosing a brain tumor.

### Summary

Preferred embodiments relate to an apparatus according to claim 1 for determining a layer thickness of a plurality of layers arranged on a body, wherein said apparatus comprises, inter alia, a first measuring device configured to determine a layer thickness of at least one of said plurality of layers by performing one or more measurements using Terahertz, THz, radiation, wherein said apparatus further comprises a second measuring device configured to determine a layer thickness of at least one of said plurality of layers by performing one or more measurements based on an optical signal. This enables an increased precision regarding layer thickness measurements.

As an example, according to further embodiments, said plurality of layers may comprise n many layers, n=2, 3, 4, .., e.g. two or more layers, wherein preferably a respective layer thickness of each of said n many layers may be determined by means of said apparatus.

Particularly, if adjacent layers comprise a similar refractive index for said THz radiation, in some constellations it may be difficult if not impossible with conventional THz measurement systems to resolve said adjacent layers and to measure their individual layer thicknesses. According to preferred embodiments, this problem may be addressed by using the second measuring device operating with optical signals, instead of THz radiation, as for the wavelengths of the optical signals used by said second measuring device - opposed to the wavelengths of the THz radiation - a difference of the respective refractive index of said adjacent layers may be large enough to enable a proper distinction between said adjacent layers and hence individual layer thickness measurement. In other words, preferred embodiments enable to distinguish between adjacent layers a thickness of which is to be measured at least with one of the two employed measuring devices thus increasing flexibility and precision regarding layer thickness measurement.

According to further preferred embodiments, said measurements using THz radiation comprise measurements based on time-domain reflectometry, TDR. Examples for TDR techniques based on THz radiation, which may be employed by the first measuring device according to further preferred embodiments, are disclosed in "Inline Multilayer Thickness Sensing by using Terahertz Time-Domain Spectroscopy in Reflection geometry", S. Krimi et al., DOI: 10.1109/IRMMW-THz.2013.6665871.

According to further preferred embodiments, said THz radiation comprises at least one frequency component in the range of 0.3 THz and 100 THz, preferably in the range of 0.5 THz and 10 THz. According to further preferred embodiments, said THz radiation comprises several frequency components in the range of 0.3 THz and 100 THz, preferably in the range of 0.5 THz and 10 THz.

According to further preferred embodiments, said THz radiation comprises THz pulses, wherein at least 60 percent of the signal energy of a single THz pulse is allocated in a frequency range between 0.3 THz and 100 THz, preferably between 0.5 THz and 10 THz, wherein more preferably at least 80 percent of the signal energy of said THz pulse is allocated in a frequency range between 0.3 THz and 100 THz, preferably between 0.5 THz and 10 THz.

According to further preferred embodiments, said optical signal comprises at least one wavelength component in the range of 1 nanometer, nm, and 3 micrometers, pm, preferably in the range of 280 nm and 3 µm.

According to further preferred embodiments, said first measuring device comprises a THz transmitter configured to emit a THz signal to said plurality of layers and a THz receiver configured to receive a reflected portion of said THz signal that has been reflected by at least one layer of said plurality of layers.

According to further preferred embodiments, said second measuring device comprises at least one of the following elements: a) a confocal microscope, b) a swept-wavelength interferometer, c) a low-coherence interferometer, d) an optical triangulation sensor, e) an achromatic confocal system, which enables to perform precise thickness measurements based on an optical signal.

According to the invention, said apparatus is configured to determine, by means of said second measuring device, a layer thickness of a top layer of said plurality of layers, and to determine, by means of said first measuring device, a layer thickness of at least one further one of said plurality of layers depending on said layer thickness of the top layer.

According to further preferred embodiments, said apparatus is configured to perform the following steps: perform a first layer thickness measurement at a measuring zone of said plurality of layers with said first measuring device, perform a second layer thickness measurement at said measuring zone of said plurality of layers with said second measuring device.

According to further preferred embodiments, said apparatus comprises a positioning system configured to position at least one component of the apparatus relative to said plurality of layers.

Further preferred embodiments relate to a method of operating an apparatus for determining a layer thickness of a plurality of layers arranged on a body according to claim 8, wherein said apparatus comprises a first measuring device configured to determine a layer thickness of at least one of said plurality of layers by performing one or more measurements using THz radiation, wherein said apparatus further comprises a second measuring device configured to determine a layer thickness of at least one of said plurality of layers by performing one or more measurements based on an optical signal, said method comprising, inter alia: determining, by means of said first measuring device a layer thickness of at least one of said plurality of layers, determining, by means of said second measuring device, a layer thickness of at least one of said plurality of layers.

According to further preferred embodiments, said THz radiation comprises at least one frequency component in the range of 0.3 THz and 100 THz, preferably in the range of 0.5 THz and 10 THz.

According to further preferred embodiments, said optical signal comprises at least one wavelength component in the range of 1 nanometer, nm, and 3 micrometers, pm, preferably in the range of 280 nm and 3 µm.

According to further preferred embodiments, said first measuring device comprises a THz transmitter configured to emit a THz signal to said plurality of layers and a THz receiver configured to receive a reflected portion of said THz signal that has been reflected by at least one layer of said plurality of layers, wherein said apparatus at least temporarily stores said reflected portion.

According to further preferred embodiments, said apparatus uses at least one of the following elements as said second measuring device: a) a confocal microscope, b) a swept-wavelength interferometer, c) a low-coherence interferometer, d) an optical triangulation sensor, e) an achromatic confocal system.

According to the invention, said apparatus determines, by means of said second measuring device, a layer thickness of a top layer of said plurality of layers, and determines, by means of said first measuring device, a layer thickness of at least one further one of said plurality of layers depending on said layer thickness of a top layer. According to further preferred embodiments, said apparatus performs a first layer thickness measurement at a measuring zone of said plurality of layers with said first measuring device and performs a second layer thickness measurement at said measuring zone of said plurality of layers with said second measuring device.

Further preferred embodiments relate to a use of the apparatus according to the embodiments and/or the method according to the embodiments for determining layer thicknesses of a plurality of layers arranged on a surface of a body, wherein preferably said body and/or said surface of said body is electrically conductive, wherein preferably a top layer of said plurality of layers comprises a clear coat, and wherein preferably a second layer, which is adjacent to said top layer, comprises a base coat.

### Brief description of the figures

Further features, aspects and advantages of the embodiments are given in the following detailed description with reference to the drawings in which:
- Figure 1: schematically depicts a simplified block diagram of an apparatus according to preferred embodiments,
- Figure 2: schematically depicts a simplified block diagram of a first measuring device according to further preferred embodiments,
- Figure 3: schematically depicts a simplified block diagram of a second measuring device according to further preferred embodiments,
- Figure 4: schematically depicts a simplified block diagram of a second measuring device according to further preferred embodiments,
- Figure 5: schematically depicts a simplified block diagram of a control device according to further preferred embodiments,
- Figure 6A to 6F: each schematically depict a simplified flow-chart of a method according to further preferred embodiments, and
- Figure 7: schematically depicts aspects of a second measuring device according to further preferred embodiments,

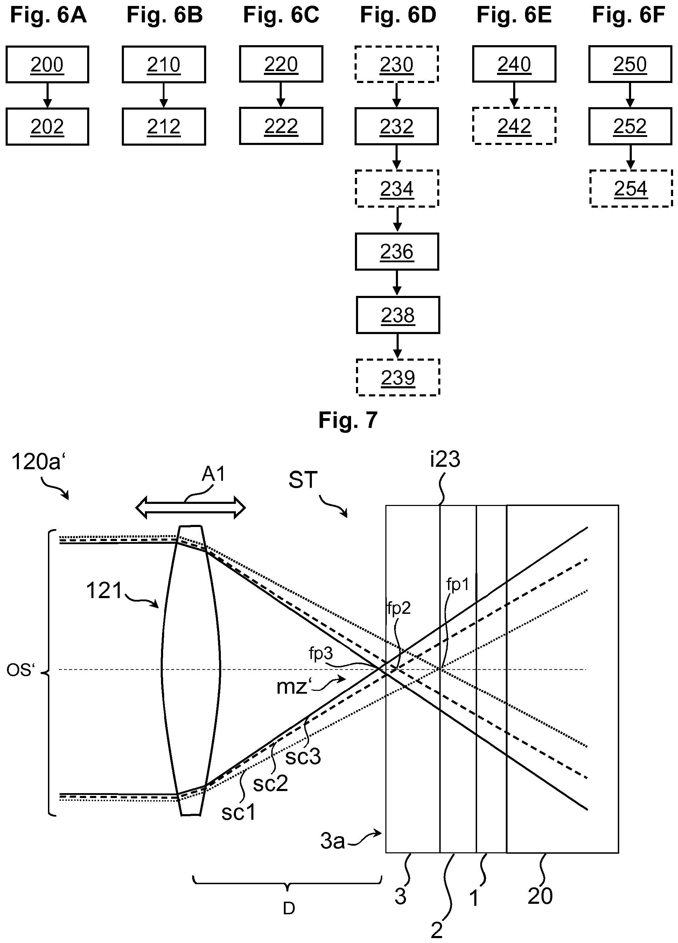

The embodiments shown in figures 6A, 6C, 6E (in case the step 242 is not referring to fig. 6B or 6D), and 6F are not encompassed by the wording of the claims but are considered as useful for understanding the invention.

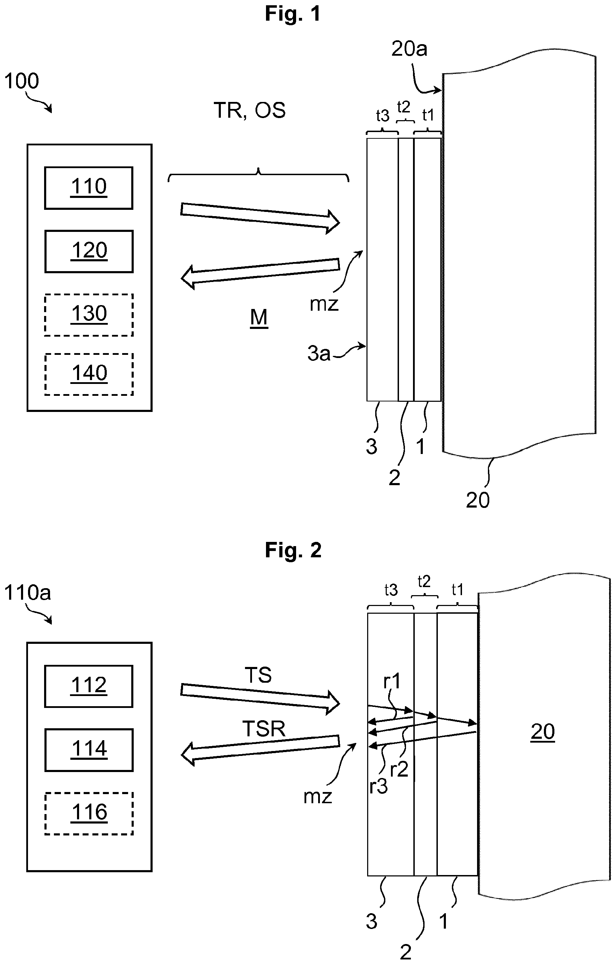

Figure 1 schematically depicts a simplified block diagram of an apparatus 100 according to preferred embodiments. The apparatus 100 is configured to determine a respective layer thickness t1, t2, t3 of a plurality of layers 1, 2, 3 arranged on a body 20. Presently, three layers 1, 2, 3 are exemplarily depicted. However, according to further preferred embodiments, more than three layers or less than three layers are also possible.

According to further preferred embodiments, said body 20 may comprise an electrically conductive material such as metal, e.g. sheet metal, or at least an electrically conductive surface 20a on which said layers 1, 2, 3 are provided. According to further preferred embodiments, said body 20 may also comprise an electrically isolating material and/or an electrically isolating surface 20a.

According to further preferred embodiments, said body 20 may comprise or represent a component of a vehicle, e.g. land vehicle such as a car, or an aircraft or the like. According to further preferred embodiments, one or more of said layers 1, 2, 3 may comprise or represent a coating of said component 20, e.g. a polymeric coating or the like. According to further preferred embodiments, said body 20 is a metallic part of a car, and the layers 1, 2, 3 are coating layers such as paint layers. As an example, according to further preferred embodiments, the first layer 1 may be a cataphoretic coating, e.g. cataphoretic paint layer, the second layer 2 may be a base coat layer, and the third layer 3, which represents the top layer of the exemplary configuration of Fig. 1, may be a clear coat layer.

According to further preferred embodiments, said apparatus 100 comprises a first measuring device 110 configured to determine a layer thickness of at least one of said plurality of layers 1, 2, 3 by performing one or more measurements using Terahertz, THz, radiation TR.

According to further preferred embodiments, said apparatus 100 further comprises a second measuring device 120 configured to determine a layer thickness of at least one of said plurality of layers 1, 2, 3 by performing one or more measurements based on an optical signal OS.

The use of both the first measuring device 110 and the second measuring device 120 according to further preferred embodiments enables an increased precision regarding layer thickness measurements, as different measurement principles or at least different wavelengths of electromagnetic radiation may be, preferably selectively, applied, i.e. THz radiation TR, cf. the first measuring device 110, and optical signals OS, cf. the second measuring device 120.

According to further preferred embodiments, both measuring devices 110, 120 perform the respective measurements within the same measuring zone mz, i.e. by irradiating said measuring zone mz with THz radiation TR and/or optical signal(s), and by receiving and/or evaluating reflected THz radiation and/or optical signal(s) that are reflected at one or more interfaces of the layer stack comprising the layers 1, 2, 3 and the body 20.

According to further preferred embodiments, said measuring zone mz may be characterized as a portion of the surface 3a of the top layer 3 ("measuring spot"). In other words, according to further preferred embodiments, both measuring devices 110, 120 preferably irradiate the same surface portion mz of the surface 3a of the top layer 3. According to further preferred embodiments, both measuring devices 110, 120 preferably irradiate the same surface portion mz of the surface 3a of the top layer with the same angle of incidence for the respective type of signals used (THz radiation TR and optical signals OS).

As an example, according to further preferred embodiments, at least a portion of the THz radiation and/or optical signal(s) irradiated to said measuring zone mz may be reflected at a) the interface between the top surface 3a of the third layer 3 and the surrounding medium M, e.g. air, and/or b) the interface between the second layer 2 and the third layer 3, and/or c) the interface between the first layer 1 and the second layer 2, and/or d) the interface between the surface 20a of the body and the top layer 1. According to further preferred embodiments, the properties of the portion(s) of THz radiation TR and/or optical signals reflected at said interface(s) such as e.g. an amplitude and/or a phase and the like depend on the material properties of the respective adjacent layers forming said interfaces, e.g. a (complex) refractive index, and the like.

Figure 2 schematically depicts a simplified block diagram of a first measuring device 110a according to further preferred embodiments. According to further preferred embodiments, the first measuring device 110 of Fig. 1 may comprise a configuration similar or identical to the measuring device 110a of Fig. 2.

The first measuring device 110a comprises a THz transmitter 112 configured to emit a THz signal TS to said plurality of layers, particularly to the measuring zone mz, and a THz receiver 114 configured to receive a reflected portion TSR of said THz signal TS that has been reflected by at least one layer of said plurality of layers 1, 2, 3. Preferably, the measuring device 110a and/or the apparatus 100 (Fig. 1) at least temporarily stores said reflected portion TSR (or any representation thereof, e.g. in the form of digital data), e.g. for evaluation as explained in further detail below. According to further preferred embodiments, said first measuring device 110a may comprise an optional control device 116 that may be configured to at least temporarily control an operation of said first measuring device 110a and/or to at least temporarily store said reflected portion TSR of a preceding measurement process, e.g. for evaluation. According to further preferred embodiments, said measurements using THz radiation TR comprise measurements based on time-domain reflectometry, TDR. Examples for TDR techniques based on THz radiation, which may be employed by the first measuring device 110a according to further preferred embodiments, are disclosed in "Inline Multilayer Thickness Sensing by using Terahertz Time-Domain Spectroscopy in Reflection geometry", S. Krimi et al., DOI: 10.1109/IRMMW-THz.2013. 6665871.

According to further preferred embodiments, said THz radiation TR (Fig. 1) or the THz signal TS (Fig. 2), respectively, comprises at least one frequency component in the range of 0.3 THz and 100 THz, preferably in the range of 0.5 THz and 10 THz. According to further preferred embodiments, said THz radiation TR, TS comprises several frequency components in the range of 0.3 THz and 100 THz, preferably in the range of 0.5 THz and 10 THz.

According to further preferred embodiments, said THz radiation TR, TS comprises THz pulses, wherein at least 60 percent of the signal energy of a single THz pulse is allocated in a frequency range between 0.3 THz and 100 THz, preferably between 0.5 THz and 10 THz, wherein more preferably at least 80 percent of the signal energy of said THz pulse is allocated in a frequency range between 0.3 THz and 100 THz, preferably between 0.5 THz and 10 THz.

According to further preferred embodiments, said measurements using THz radiation TR or the THz signal TS, respectively, comprise irradiating said body 20 with its layers 1, 2, 3 with one or more pulse of THz radiation TR, cf. the THz signal TS of Fig. 2. In this respect, Figure 2 also exemplarily depicts some reflected signal portions r1, r2, r3 of said THz signal TS, which are obtained be reflections at respective layer interfaces. As an example, reflected signal portion r1 is obtained from a (partial) reflection of said incident THz signal TS at the interface between the second layer 2 and the third layer 3, reflected signal portion r2 is obtained from a (partial) reflection of said incident THz signal TS at the interface between the first layer 1 and the second layer 2, and reflected signal portion r3 is obtained from a (partial) reflection of said incident THz signal TS at the interface between the body surface 20a and the first layer 1. Note that the reflected signal portions r1, r2, r3 explicitly depicted in Fig. 2 are only for exemplary purposes and that especially higher-order reflections (i.e., partial reflection of reflected signal portion r1 at the interface between surface 3a and the surrounding medium M) are not shown for the sake of clarity, as well as reflected signal portions directly reflected at the surface 3a (interface of medium M with top layer 3).

According to further preferred embodiments, a sum of reflected signal portions r1, r2, r3, .. that has interacted with at least one of said elements 1, 2, 3, 20, and that may be received by said THz receiver 114, is denoted with reference sign TSR.

According to exemplary aspects, particularly if adjacent layers 2, 3, i.e. a clear coat layer 3 and a base coat layer 2, comprise a similar refractive index for said THz radiation TR or THz signal TS, in some constellations it may be difficult if not impossible with THz-based measurement systems to resolve said adjacent layers 2, 3, as the reflected signal portion r1 comprises a comparatively low signal energy (due to the similar refractive indices). This way, at least for some material combinations of e.g. adjacent layers 2, 3, some systems may not be capable of measuring the respective individual layer thickness t2, t3 of said layers 2, 3 by applying a THz signal-based measurement approach alone.

According to further preferred embodiments, this aspect may be addressed by using the second measuring device 120 (Fig. 1) operating with optical signals OS, instead of THz radiation TR, TS, as for the wavelengths of the optical signals OS used by said second measuring device 120 - opposed to the significantly different wavelengths of the THz radiation - a difference of the respective refractive index of said adjacent layers 2, 3 may be large enough to enable a proper distinction between said adjacent layers 2, 3 and hence individual layer thickness measurement. In other words, further preferred embodiments enable to distinguish between adjacent layers 2, 3 a thickness t2, t3 of which is to be measured at least with one of the two employed measuring devices 110, 120 of the apparatus 100 thus increasing flexibility and precision regarding layer thickness measurement.

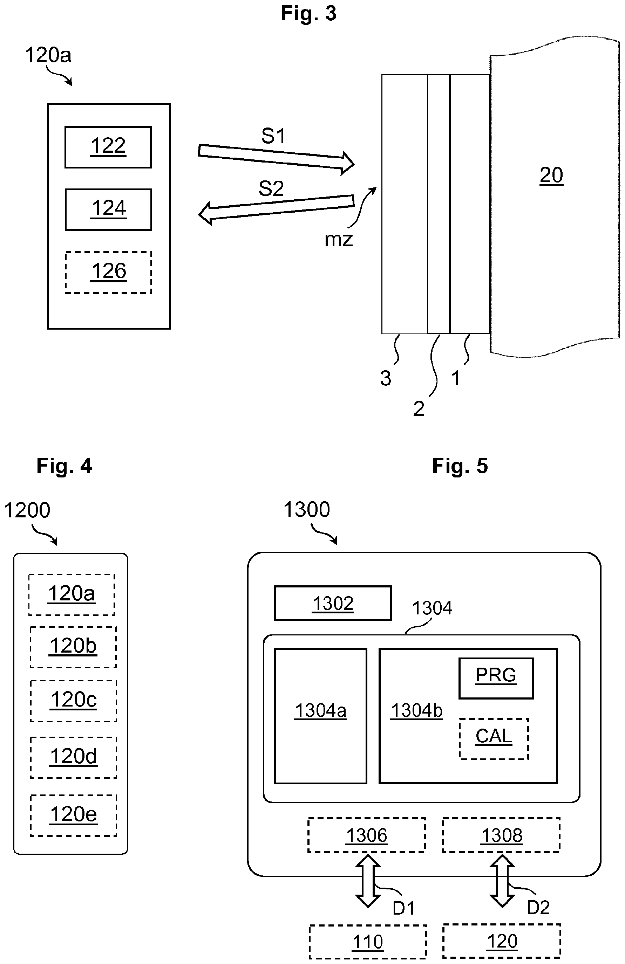

Figure 3 schematically depicts a simplified block diagram of a second measuring device 120a according to further preferred embodiments. According to further preferred embodiments, the second measuring device 120 of Fig. 1 may comprise a configuration similar or identical to the measuring device 120a of Fig. 3. The second measuring device 120a comprises a light source 122 configured to emit a first optical signal S1 to said plurality of layers 1, 2, 3, particularly to the measuring zone mz, and a detector 124 configured to receive a second optical signal S2 formed by a reflected portion of said first signal S1 that has been reflected by at least one layer of said plurality of layers 1, 2, 3.

According to further preferred embodiments, said second measuring device 120a may comprise an optional control device 126 that may be configured to at least temporarily control an operation of said second measuring device 120a and/or to at least temporarily store said second optical signal S2 or a signal derived from said second optical signal S2, i.e. an electric signal determined based on said second optical signal S2 (or a preferably digital representation thereof).

As an example, according to further preferred embodiments, the second measuring device 120a may be a confocal microscope.

According to further preferred embodiments, said optical signal OS (Fig. 1), S1 (Fig. 3) comprises at least one wavelength component in the range of 1 nanometer, nm, and 3 micrometers, pm, preferably in the range of 280 nm and 3 µm.

According to further preferred embodiments, said second measuring device 120 (Fig. 1) comprises a configuration 1200 as exemplarily depicted by Figure 4. Particularly, said second measuring device 1200 comprises at least one of the following elements: a) a confocal microscope 120a (Fig. 3), b) a swept-wavelength interferometer 120b, c) a low-coherence interferometer 120c, d) an optical triangulation sensor 120d, e) an achromatic confocal system 120e.

According to further preferred embodiments, if said second measuring device 120 (Fig. 1) comprises or is configured as a swept-wavelength interferometer 120b, said swept-wavelength interferometer 120b comprises a wavelength tuning range in the order of 20 nm to 800 nm, preferably 100 nm.

According to further preferred embodiments, if said second measuring device 120 (Fig. 1) comprises or is configured as a low-coherence interferometer 120c, said low-coherence interferometer 120c comprises a spectral width between 50 nm and 400 nm, preferably between 100 nm and 200 nm.

According to further preferred embodiments, if said second measuring device 120 (Fig. 1) comprises or is configured as an optical triangulation sensor 120d, said optical triangulation sensor 120d comprises a comparatively small focal length and the capability of multi-peak evaluation enabling measurement of e.g. the thickness t3 of the top layer 3 (Fig. 3).

According to further preferred embodiments, cf. Fig. 1, the apparatus 100 comprises an optional control device 130 that may be configured to at least temporarily control an operation of said apparatus 100 and/or of at least one of its components 110, 120. According to further preferred embodiments, said control device 130 may at least temporarily control an operation of the first measuring device 110, 110a for performing THz radiation-based measurements of the thickness t1, t2, t3 of any of said layers 1, 2, 3. According to further preferred embodiments, said control device 130 may at least temporarily control an operation of the second measuring device 120, 120a for performing optical signal-based measurements of the thickness t1, t2, t3 of any of said layers 1, 2, 3, preferably at least of the thickness t3 of said top layer.

According to further preferred embodiments, cf. Fig. 1, the apparatus 100 comprises an optional positioning system 140 configured to position at least one component 110, 120 of the apparatus 100 relative to said plurality of layers 1, 2, 3 and/or said body 20. According to further preferred embodiments, said optional positioning system 140 may comprise a robot (not shown), e.g. a robotic arm, which facilitates application of said apparatus 100 e.g. in a production environment, e.g. in-line with other devices and systems. According to further preferred embodiments, alternatively or additionally to said robot, said optional positioning system 140 may comprise a fine positioning system configured to effect movement of at least one component 110, 120 of the apparatus 100 relative to said plurality of layers 1, 2, 3 and/or said body 20 with an increased precision, e.g. being capable of fine-tuning a position of said at least one component 110, 120 in the µm and/or sub-pm range.

Figure 5 schematically depicts a simplified block diagram of a control device 1300 according to further preferred embodiments. According to further preferred embodiments, the optional control device 130 of Fig. 1 may comprise a configuration identical or at least similar to the control device 1300 of Figure 5.

According to further preferred embodiments, the control device 1300 comprises at least one calculating unit 1302, at least one memory unit 1304 associated with (i.e., usably by) the at least one calculating unit 1302 for at least temporarily storing a computer program PRG, wherein said computer program PRG is configured to at least temporarily control an operation of said control device 1300 and/or said apparatus 100 and/or at least one component 110, 120, 140 of said apparatus 100.

According to further preferred embodiments, the calculating unit 1302 comprises at least one of the following elements: a microprocessor, a microcontroller, a digital signal processor (DSP), a programmable logic element (e.g., FPGA, field programmable gate array), an ASIC (application specific integrated circuit). According to further preferred embodiments, any combination of two or more of these elements is also possible.

According to further preferred embodiments, the memory unit 1304 comprises at least one of the following elements: a volatile memory 1304a, particularly a random-access memory (RAM), a non-volatile memory 1304b, particularly a Flash-EEPROM. Preferably, said computer program PRG is stored in said non-volatile memory 1304b.

According to further preferred embodiments, calibration data CAL which may be required for an operation of the apparatus 100 and/or one of its components 110, 120, 140, may also at least temporarily be stored in the memory unit 1304, preferably in said non-volatile memory 1304b.

According to further preferred embodiments, the control device 1300 comprises a first interface 1306 enabling data communication D1 with and/or control of the first measuring device 110, 110a (Fig. 1, 2). According to further preferred embodiments, the control device 1300 comprises a second interface 1308 enabling data communication D2 with and/or control of the second measuring device 120, 120a (Fig. 1, 3). This way, according to further preferred embodiments, an operation of either measuring device 110, 120 may be efficiently and centrally controlled by the control device 1300. According to further preferred embodiments, the control device 1300 may control an overall operation of the apparatus 100, e.g. coordinating an operation of the measuring devices 110, 120, while at least some aspects of operation of the measuring devices 110, 120 may be controlled by the respective optional local control device 116 (Fig. 2), 126 (Fig. 3).

Further preferred embodiments relate to a method of operating the apparatus 100 according to the embodiments. Figure 6A schematically depicts a simplified flow-chart of a method according to further preferred embodiments. The method comprises: determining 200, by means of said first measuring device 110 (Fig. 1) a layer thickness t1, t2, t3 of at least one of said plurality of layers 1, 2, 3, and determining 202 (Fig. 6A), by means of said second measuring device 120 (Fig. 1), a layer thickness t1, t2, t3 of at least one of said plurality of layers t1, t2, t3.

According to further preferred embodiments, the steps 200, 202 may also be performed in another sequence, i.e. first measuring 202 using said second measuring device 120, and then measuring 200 using said first measuring device 110.

As an example, if the layer thickness t3 of the top layer 3 is measured by using both the first measuring device 110 and the second measuring device 120, the so obtained respective thickness values may be checked for plausibility.

According to further preferred embodiments, cf. the flow-chart of Fig. 6B, the apparatus 100 (Fig. 1) determines 210 (Fig. 6B), by means of said second measuring device 120 (Fig. 1), a layer thickness t3 of the top layer 3 of said plurality of layers 1, 2, 3, and determines 212 (Fig. 6B), by means of said first measuring device 110, a layer thickness t1, t2 of at least one further one of said plurality of layers depending on said layer thickness t3 of the top layer 3. This way, the thickness t3 of the top layer 3 may be precisely determined by using optical signals OS, S1, i.e., using the second measuring device 120, even if the optical properties, particularly the refractive index, of the adjacent layers 2, 3 do not allow for a distinction between said adjacent layers 2, 3 by means of THz radiation-based measurements. Moreover, once the layer thickness t3 of the top layer 3 is obtained from said determination 210, the thickness of the further layers 1, 2 may be determined based on the layer thickness t3 and the THz measurements obtained in step 212, cf. the THz signal TSR of Fig. 2.

According to further preferred embodiments, said apparatus 100 performs a first layer thickness measurement at a measuring zone mz (Fig. 1) of said plurality of layers with said first measuring device 110, cf. step 220 of Fig. 6C, and performs a second layer thickness measurement at said (same) measuring zone mz of said plurality of layers with said second measuring device 120, cf. step 222 of Fig. 6C. This way, it is ensured that both measurements relate to the same region of the object 1, 2, 3, 20 to be measured.

Figure 6D schematically depicts a flow-chart of a method according to further preferred embodiments. In the optional step 230, a reference measurement is made by means of the first measuring device 110 (Fig. 1). According to further preferred embodiments, said optional reference measurement 230 may comprise irradiating a THz pulse signal TS (Fig. 3) to a reference object or reference surface and receiving a reflected reference signal that is obtained after reflection of said THz pulse signal at said reference object. As an example, said reference object or reference surface may comprise an uncoated surface portion 20a of the body 20, preferably a planar surface portion. According to further preferred embodiments, the optional reference measurement 230 or the reflected reference signal obtained thereby may be used to increase the precision of thickness measurements related to the layers 1, 2, 3. As an example, according to further preferred embodiments, device specific signal properties of e.g. the THz transmitter 112 (Fig. 2) and/or the THz receiver 114 and/or further components of the first measuring device 110 may be eliminated from a measurement signal TSR under knowledge of said reflected reference signal. According to further preferred embodiments, said reflected reference signal or information derived therefrom may at least temporarily be stored as a part of the calibration data CAL, cf. Fig. 5.

Returning to Fig. 6D, in step 232, the first measuring device 110 performs a first layer thickness measurement at the measuring zone mz. According to further preferred embodiments, said first layer thickness measurement 232 may comprise irradiating a THz pulse signal TS (Fig. 3) to the layers 1, 2, 3 and body 20, e.g. at the measuring zone mz, and receiving a reflected THz measurement signal TSR that is obtained after reflection of said THz pulse signal TS at said reference object 1, 2, 3, 20. According to further preferred embodiments, said reflected THz measurement signal TSR and/or or information derived therefrom may at least temporarily be stored, e.g. for future evaluation, preferably in form of a representation by means of digital data. In other words, although termed as "first layer thickness measurement", according to further preferred embodiments, step 232 does not necessarily comprise an evaluation, i.e. determination of the layer thicknesses t1, t2, t3 yet. Acccording to the invention, such evaluation is performed later in the process exemplarily depicted by Fig. 6D, i.e. once the optical measurement obtained by means of the second measuring device 120 has been performed, cf. step 236 further below.

Accordingly, in the optional step 234, said second measuring device 120 is moved into a position enabling a second layer thickness measurement, by means of said second measuring device 120, preferably at said same measuring zone mz. The optional step 234 may, according to further preferred embodiments, e.g. be performed if only one of said measurement devices 110, 120 (or respective components thereof) may be aligned for measurement at said measuring zone mz at a time. However, according to further preferred embodiments, particularly for configurations wherein both measurement devices 110, 120 may perform respective first and second layer thickness measurements at said measuring zone mz, the optional step 234 may also be omitted.

According to further preferred embodiments, the optional step 234 may comprise positioning said second measuring device 120 relative to the measuring zone mz such that it is properly aligned with the body 20, particularly regarding a lateral positioning and/or an angular positioning (e.g., aligning the optical axis of the second measuring device 120 with a surface normal of the surface 3a at the measuring zone mz) and/or a distance to the surface 3a.

According to further preferred embodiments, in step 236, the second measuring device 120 performs a second layer thickness measurement at the measuring zone mz. According to the invention, said second layer thickness measurement comprises or is followed by) determining a layer thickness t3 of the top layer 3, cf. step 238. In other words, step 236 may comprise emitting an optical signal S1 to the measuring zone mz and receiving a reflected optical signal S2, and optionally converting at least a portion of the received reflected optical signal S2 to the electrical domain, and step 238 comprises an evaluation of the signal obtained in step 236, wherein said evaluation 238 yields the layer thickness t3 of the third, i.e. top, layer 3.

According to further preferred embodiments, the evaluation 238 is performed under knowledge of the refractive index (particularly in an optical wavelength range, especially within an operating wavelength range of the second measuring device 120) of the top layer 3. According to further preferred embodiments, the refractive index of the top layer 3 may be determined by a (preferably separate) measurement and/or by configuration (e.g., measurement of said refractive index of the top layer 3 in advance, e.g. by means of a separate system, and by providing the so obtained refractive index to the apparatus 100, e.g. in the form of calibration data CAL, cf. Fig. 5.

After that, in the step 239, under knowledge of the thickness t3 of the top layer 3 (obtained in step 238) and the reflected THz measurement signal TSR as obtained by step 232, the remaining layer thicknesses t1, t2 is determined by the apparatus 100. In other words, according to the invention, the thickness t3 of the top layer 3 is determined by the second measuring device 120 based on an optical measurement principle, and the so obtained value of the thickness t3 is used as an input parameter, similar to the reflected THz measurement signal TSR as obtained by step 232, for determination of the further layer thicknesses t1, t2.

According to further preferred embodiments, when using a (chromatic) confocal microscope 120a (Fig. 4) as said second measuring device 120, an optimum working distance between said confocal microscope 120a and the object to be measured, i.e. a stack comprising the body 20 and the layers 1, 2, 3, is determined for a specific type of coating that may constitute the top layer 3 or a layer 2 beneath the top layer 3. In other words, according to further preferred embodiments, depending on the type of material of the top layer (or a further layer 2), a respectively optimized working distance or measurement distance between said confocal microscope 120a and the surface 3a to be measured is determined.

Figure 7 schematically depicts a side view of a measurement configuration comprising optical components 121 of an exemplary confocal microscope 120a' that may form a basis for a second measuring device 120 according to further preferred embodiments. The confocal microscope 120a' is arranged at a certain distance D with respect to the surface 3a of the top layer 3. As can be seen from Fig. 7, within the measuring zone mz', different spectral components sc1, sc2, sc3 of the optical signal OS' employed by the confocal microscope 120a' for measurement are focused at different respective distances, cf. the respective focal points fp1, fp2, fp3.

According to further preferred embodiments, a layer thickness measurement of e.g. the top layer 3 is performed by using those spectral components of the optical signal OS' that are focused at the respective interfaces between adjacent layers 2, 3. As an example, the focal point fp1 of the spectral component sc1 is positioned at the interface i23 between the top layer 3 and the second layer 2.

According to further preferred embodiments, the measurement distance D between elements 120a, 3a is chosen such that the focal point of those spectral components of the optical signal OS', which experience the highest degree of reflection (i.e., maximum absolute value of reflection coefficient) at the interface i23 between the top layer 3 and the adjacent layer 2 (which is beneath the top layer 3), are positioned at the interface i23. In other words, supposing that the first spectral component sc1 has the largest reflection factor with respect to the second layer 2 (and/or the interface i23), the exemplarily depicted measurement distance D of Fig. 7 corresponds with the optimum distance as the focal point fp1 of the first spectral component sc1 is positioned at the interface i23. This way, precise optical measurements of the thickness t3 of the top layer 3 are enabled.

According to further preferred embodiments, the above described determination of the desired measurement distance D may be performed, particularly once, for each possible type of coating, preferably of the layer 3 and/or the layer 2 and/or respective combinations of both layers, wherein layer 2 is beneath the top layer 3.

According to further preferred embodiments, said determination of the desired measurement distance D per coating type may be performed in a calibration cycle, i.e. preceding the process of Fig. 6D. This is exemplarily depicted by Fig. 6E. In a first step 240, an optimum measurement distance D for one or more different types of coating material, which may e.g. form the layer 2 of the stack ST (Fig. 7) to be measured, may be determined.

According to further preferred embodiments, this may be done using a-priori knowledge about the material of the layer 2, e.g. a characteristic reflectivity of the respective coating material). Subsequently, in the optional step 242, the process according to any of the flow-charts of Fig. 6A to 6D may be performed.

According to further preferred embodiments, the desired measurement distance D may be set e.g. by the optional positioning device 140 explained above with respect to Fig. 1, also cf. the block arrow A1 of Fig. 7, which symbolizes the movement of the second measuring device 120a', preferably along an optical axis, which is further preferably aligned with a surface normal vector (not shown) of the top surface 3a.

According to further preferred embodiments, a separate positioning device may be provided to effect a relative movement, particularly linear/translational, relative movement of the confocal microscope 120a and a further component of the apparatus 100, e.g. the first measuring device 110. Said separate positioning device (not shown) may be configured to provide the fine tuning of the measurement distance D, e.g. providing stepped and/or continuous movements in the order of 1 µm or below.

Figure 6F schematically depicts a simplified flow-chart of a method according to further preferred embodiments, wherein the refractive index of the coating material of the top layer 3 (Fig. 7) is determined, particularly for wavelengths employed by the second measuring device 120, 120a'. Step 250 (Fig. 6F) comprises: providing a reflective substrate, e.g. a, preferably planar, sheet metal (e.g., bright annealed steel), coating said substrate with the coating material, cutting the coated substrate. Step 252 comprises determining the geometric layer thickness of the coating, e.g. from an index profile, and determining the optical layer thickness of the coating, e.g. by means of said second measuring device 120, e.g. a confocal microscope. The refractive index of said coating material may then be determined as the quotient of said geometric layer thickness and said optical layer thickness.

According to further preferred embodiments, this procedure of determining the refractive index of said coating material may be repeated for different wavelengths, especially in a wavelength range used by said second measuring device 120, for example in the range of 1 nanometer, nm, and 3 micrometers, pm, preferably in the range of 280 nm and 3 µm or at least one subrange thereof. This optional determination of said refractive index of said coating material for other wavelengths is symbolized by optional step 254 of Fig. 6F.

According to further preferred embodiments, other than the above explained optical thickness measurement principles may be employed for said second measuring device 120, e.g. for measuring the thickness t3 of the top layer 3. According to further preferred embodiments, such other principles may meet at least one of the following preferred criteria: sufficient tolerance related to an angle of incidence of the optical signal OS onto the measuring zone mz (preferably greater than 1°), enable thickness measurements in a sufficiently large distance range (preferably > 0.5 mm), insusceptible to environmental influences/stresses, e.g. vibrations, a dimension of the measuring zone is smaller than or equal to the measuring zone mz of the first measuring device 110 ("THz measuring spot").

Further preferred embodiments relate to a use of the apparatus 100 according to the embodiments and/or the method according to the embodiments for determining layer thicknesses t1, t2, t3 of a plurality of layers 1, 2, 3 arranged on a surface 20a of a body 20, wherein said body 20 and/or said surface 20a of said body 20 is electrically conductive, wherein preferably a top layer 3 of said plurality of layers 1, 2, 3 comprises a clear coat, and wherein preferably a second layer 2, which is adjacent to said top layer 3, comprises a base coat. According to further preferred embodiments, said body 20 and/or its surface 20a is/are not electrically conductive.

Preferred embodiments enable an efficient and precise measurement of layer thickness t1, t2, t3 of several layers 1, 2, 3 of e.g. coating, for example polymeric coating such as paint, on a substrate such as a body made of sheet metal or the like. Also, preferred embodiments enable a reliable discrimination of adjacent layers 2, 3 and measurement of their respective thickness t2, t3 (as well as thicknesses t1 of other layers 1) even if a relative difference of their index of refraction is comparatively small for THz radiation.

According to further preferred embodiments, the apparatus 100 may perform thickness measurements by means of the first measuring device 110, i.e. THz radiation-based, and the apparatus 100 may selectively perform one or more further thickness measurements by means of said second, i.e. optical, measuring device 120 if a predetermined criterion is met.

According to further preferred embodiments, such predetermined criterion may comprise: indicia that a THz radiation-based measurement (alone) does not yield sufficiently precise results for at least one thickness value t3 of at least one layer 3 (e.g., deviation from an expected layer thickness exceeds a predetermined first threshold), time (i.e., additional thickness measurements using said second measuring device 120 may periodically be performed, i.e. each n-th THz radiation-based measurement, n= 1, 2, ..), a control signal received from an external device and/or human operator of the apparatus.

## Claims

1. Apparatus (100) for determining a layer thickness (t1, t2, t3) of a plurality of layers (1, 2, 3) arranged on a body (20), wherein said apparatus (100) comprises a first measuring device (110; 110a) configured to determine (200) a layer thickness (t1, t2, t3) of at least one of said plurality of layers (1, 2, 3) arranged on said body (20) by performing one or more measurements using Terahertz, THz, radiation (TR), wherein said apparatus (100) further comprises a second measuring device (120; 120a) configured to determine (202) a layer thickness (t3) of at least one of said plurality of layers (3) of said body (20) by performing one or more measurements based on an optical signal (OS), wherein said apparatus (100) is configured to determine (210), by means of said second measuring device (120; 120a), a layer thickness (t3) of a top layer (3) of said plurality of layers (1, 2, 3), and to determine (212), by means of said first measuring device (110; 110a), a layer thickness (t1, t2) of at least one of the further layers of said plurality of layers (1, 2, 3) depending on said layer thickness (t3) of a top layer (3).

2. Apparatus (100) according to claim 1, wherein said THz radiation (TR) comprises at least one frequency component in the range of 0.3 THz and 100 THz, preferably in the range of 0.5 THz and 10 THz.

3. Apparatus (100) according to at least one of the preceding claims, wherein said optical signal (OS) comprises at least one wavelength component in the range of 1 nanometer, nm, and 3 micrometers, pm, preferably in the range of 280 nm and 3 µm.

4. Apparatus (100) according to at least one of the preceding claims, wherein said first measuring device (110; 110a) comprises a THz transmitter (112) configured to emit a THz signal (TS) to said plurality of layers (1, 2, 3) and a THz receiver (114) configured to receive a reflected portion (TSR) of said THz signal (TS) that has been reflected by at least one layer (1, 2, 3) of said plurality of layers (1, 2, 3).

5. Apparatus (100) according to at least one of the preceding claims, wherein said second measuring device (120; 120a) comprises at least one of the following elements: a) a confocal microscope (120a), b) a swept-wavelength interferometer (120b), c) a low-coherence interferometer (120c), d) an optical triangulation sensor (120d), e) an achromatic confocal system (120e).

6. Apparatus (100) according to at least one of the preceding claims, wherein said apparatus (100) is configured to perform the following steps: perform (220) a first layer thickness measurement at a measuring zone (mz; mz') of said plurality of layers (1, 2, 3) with said first measuring device (110; 110a), perform (222) a second layer thickness measurement at said measuring zone (mz; mz') of said plurality of layers (1, 2, 3) with said second measuring device (120; 120a).

7. Apparatus (100) according to at least one of the preceding claims, wherein said apparatus (100) comprises a positioning system (140) configured to position at least one component (110, 120) of the apparatus (100) relative to said plurality of layers (1, 2, 3).

8. Method of operating an apparatus (100) for determining a layer thickness (t1, t2, t3) of a plurality of layers (1, 2, 3) arranged on a body (20), wherein said apparatus (100) comprises a first measuring device (110; 110a) configured to determine (200) a layer thickness of at least one of said plurality of layers (1, 2, 3) by performing one or more measurements using Terahertz, THz, radiation (TR), wherein said apparatus (100) further comprises a second measuring device (120; 120a) configured to determine (202) a layer thickness of at least one of said plurality of layers (1, 2, 3) by performing one or more measurements based on an optical signal (OS), said method comprising: determining (200), by means of said second measuring device (120; 120a), a layer thickness (t3) of a top layer (3) of said plurality of layers (1, 2, 3), and determining (212), by means of said first measuring device (110; 110a), a layer thickness (t1, t2) of at least one of the further layers of said plurality of layers (1, 2) depending on said layer thickness (t3) of the top layer (3).

9. Method according to claim 8, wherein a) said THz radiation (TR) comprises at least one frequency component in the range of 0.3 THz and 100 THz, preferably in the range of 0.5 THz and 10 THz, and/or b) said optical signal (OS) comprises at least one wavelength component in the range of 1 nanometer, nm, and 3 micrometers, µm, preferably in the range of 280 nm and 3 µm.

10. Method according to at least one of the claims 8 or 9, wherein said first measuring device (110; 110a) comprises a THz transmitter (112) configured to emit a THz signal (TS) to said plurality of layers (1, 2, 3) and a THz receiver (114) configured to receive a reflected portion (TSR) of said THz signal (TS) that has been reflected by at least one layer (1, 2, 3) of said plurality of layers (1, 2, 3), wherein said apparatus (100) at least temporarily stores said reflected portion (TSR).

11. Method according to at least one of the claims 8 to 10, wherein said apparatus (100) uses at least one of the following elements as said second measuring device (120): a) a confocal microscope (120a), b) a swept-wavelength interferometer (120b), c) a low-coherence interferometer (120c), d) an optical triangulation sensor (120d), e) an achromatic confocal system (120e).

12. Method according to at least one of the claims 8 to 11, wherein said apparatus (100) performs (220) a first layer thickness measurement at a measuring zone (mz) of said plurality of layers (1, 2, 3) with said first measuring device (110; 110a) and performs (222) a second layer thickness measurement at said measuring zone (mz) of said plurality of layers (1, 2, 3) with said second measuring device (120; 120a).

13. Use of the apparatus (100) according to at least one of the claims 1 to 7 and/or the method according to at least one of the claims 8 to 12 for determining layer thicknesses (t1, t2, t3) of a plurality of layers (1, 2, 3) arranged on a surface (20a) of a body (20), wherein preferably said body (20) and/or said surface (20a) of said body (20) is electrically conductive, wherein preferably a top layer (3) of said plurality of layers (1, 2, 3) comprises a clear coat, and wherein preferably a second layer (2), which is adjacent to said top layer (3), comprises a base coat.

## Patentansprüche

1. Vorrichtung (100) zum Bestimmen einer Schichtdicke (t1, t2, t3) einer Mehrzahl von Schichten (1, 2, 3), die auf einem Körper (20) angeordnet sind, wobei die Vorrichtung (100) eine erste Messvorrichtung (110; 110a) umfasst, die dafür ausgelegt ist, mittels Durchführung einer oder mehrerer Messungen unter Verwendung von Terahertz(THz)-Strahlung (TR) eine Schichtdicke (t1, t2, t3) von zumindest einer aus der Mehrzahl von Schichten (1, 2, 3), die auf dem Körper (20) angeordnet sind, zu bestimmen (200), wobei die Vorrichtung (100) ferner eine zweite Messvorrichtung (120; 120a) umfasst, die dafür ausgelegt ist, mittels Durchführung einer oder mehrerer Messungen basierend auf einem optischen Signal (OS) eine Schichtdicke (t3) von zumindest einer aus der Mehrzahl von Schichten (3) des Körpers (20) zu bestimmen (202), wobei die Vorrichtung (100) dafür ausgelegt ist, mithilfe der zweiten Messvorrichtung (120; 120a), eine Schichtdicke (t3) einer obersten Schicht (3) aus der Mehrzahl von Schichten (1, 2, 3) zu bestimmen (210), und mithilfe der ersten Messvorrichtung (110; 110a) in Abhängigkeit zu der Schichtdicke (t3) einer obersten Schicht (3) eine Schichtdicke (t1, t2) von zumindest einer der weiteren Schichten aus der Mehrzahl von Schichten (1, 2, 3) zu bestimmen (212).

2. Vorrichtung (100) nach Anspruch 1, wobei die THz-Strahlung (TR) zumindest eine Frequenzkomponente in dem Bereich zwischen 0,3 THz und 100 THz, vorzugsweise in dem Bereich zwischen 0,5 THz und 10 THz umfasst.

3. Vorrichtung (100) nach zumindest einem der vorstehenden Ansprüche, wobei das optische Signal (OS) zumindest eine Wellenlängenkomponente in dem Bereich zwischen 1 Nanometer (Nm) und 3 Mikrometer (µm), vorzugsweise in dem Bereich zwischen 280 Nm und 3 µm, umfasst.

4. Vorrichtung (100) nach zumindest einem der vorstehenden Ansprüche, wobei die erste Messvorrichtung (110; 110a) umfasst: einen THz-Sender (112), der dafür ausgelegt ist, ein THz-Signal (TS) an die Mehrzahl von Schichten (1, 2, 3) auszusenden, und einen THz-Empfänger (114), der dafür ausgelegt ist, einen reflektierten Anteil (TSR) des THz-Signals (TS), das von zumindest einer Schicht (1, 2, 3) aus der Mehrzahl von Schichten (1, 2, 3) reflektiert worden ist, zu empfangen.

5. Vorrichtung (100) nach zumindest einem der vorstehenden Ansprüche, wobei die zweite Messvorrichtung (120; 120a) zumindest eines der folgenden Elemente umfasst: a) ein Konfokalmikroskop (120a), b) ein Swept-Wavelength-Interferometer (120b), c) ein Niedrigkohärenz-Interferometer (120c), d) einen optischen Triangulationssensor (120d), e) ein achromatisches Konfokalsystem (120e).

6. Vorrichtung (100) nach zumindest einem der vorstehenden Ansprüche, wobei die Vorrichtung (100) dafür ausgelegt ist, die folgenden Schritte durchzuführen: eine erste Schichtdickenmessung der Mehrzahl von Schichten (1, 2, 3) in einer ersten Messzone (mz; mz') mit der ersten Messvorrichtung (110; 110a) durchführen (220), eine zweite Schichtdickenmessung der Mehrzahl von Schichten (1, 2, 3) in der Messzone (mz; mz') mit der zweiten Messvorrichtung (120, 120a) durchführen (222).

7. Vorrichtung (100) nach zumindest einem der vorstehenden Ansprüche, wobei die Vorrichtung (100) ein Positioniersystem (140) umfasst, das dafür ausgelegt ist, zumindest ein Bauteil (110, 120) der Vorrichtung (100) relativ zu der Mehrzahl von Schichten (1, 2, 3) zu positionieren.

8. Verfahren zum Betreiben einer Vorrichtung (100) zum Bestimmen einer Schichtdicke (t1, t2, t3) einer Mehrzahl von Schichten (1, 2, 3), die auf einem Körper (20) angeordnet sind, wobei die Vorrichtung (100) eine erste Messvorrichtung (110; 110a) umfasst, die dafür ausgelegt ist, mittels Durchführung einer oder mehrerer Messungen unter Verwendung von Terahertz(THz)-Strahlung (TR) eine Schichtdicke von zumindest einer aus der Mehrzahl von Schichten (1, 2, 3), zu bestimmen (200), wobei die Vorrichtung (100) ferner eine zweite Messvorrichtung (120; 120a) umfasst, die dafür ausgelegt ist, mittels Durchführung einer oder mehrerer Messungen basierend auf einem optischen Signal (OS) eine Schichtdicke von zumindest einer aus der Mehrzahl von Schichten (1, 2, 3) zu bestimmen (202), wobei das Verfahren umfasst: das mithilfe der zweiten Messvorrichtung (120; 120a) erfolgende Bestimmen (200) einer Schichtdicke (t3) der obersten Schicht (3) aus der Mehrzahl von Schichten (1, 2, 3), und das mithilfe der ersten Messvorrichtung (110; 110a) in Abhängigkeit zu der Schichtdicke (t3) der obersten Schicht (3) erfolgende Bestimmen (212) einer Schichtdicke (t1, t2) von zumindest einer der weiteren Schichten aus der Mehrzahl von Schichten (1, 2).

9. Verfahren nach Anspruch 8, wobei a) die THz-Strahlung (TR) zumindest eine Frequenzkomponente in dem Bereich zwischen 0,3 THz und 100 THz, vorzugsweise in dem Bereich zwischen 0,5 THz und 10 THz umfasst, und/oder b) das optische Signal (OS) zumindest eine Wellenlängenkomponente in dem Bereich zwischen 1 Nanometer (Nm) und 3 Mikrometer (µm), vorzugsweise in dem Bereich zwischen 280 Nm und 3 µm, umfasst.

10. Verfahren nach zumindest einem der Ansprüche 8 oder 9, wobei die erste Messvorrichtung (110; 110a) umfasst: einen THz-Sender (112), der dafür ausgelegt ist, ein THz-Signal (TS) an die Mehrzahl von Schichten (1, 2, 3) auszusenden, und einen THz-Empfänger (114), der dafür ausgelegt ist, einen reflektierten Anteil (TSR) des THz-Signals (TS), das von zumindest einer Schicht (1, 2, 3) aus der Mehrzahl von Schichten (1, 2, 3) reflektiert worden ist, zu empfangen, wobei die Vorrichtung (100) den reflektierten Anteil (TSR) zumindest vorübergehend speichert.

11. Verfahren nach zumindest einem der Ansprüche 8 bis 10, wobei die Vorrichtung (100) zumindest eines der folgenden Elemente als zweite Messvorrichtung (120) verwendet: a) ein Konfokalmikroskop (120a), b) ein Swept-Wavelength-Interferometer (120b), c) ein Niedrigkohärenz-Interferometer (120c), d) einen optischen Triangulationssensor (120d), e) ein achromatisches Konfokalsystem (120e).

12. Verfahren nach zumindest einem der Ansprüche 8 bis 11, wobei die Vorrichtung (100) mit der ersten Messvorrichtung (110; 110a) eine erste Schichtdickenmessung der Mehrzahl von Schichten (1, 2, 3) in einer ersten Messzone (mz) durchführt (220), und mit der zweiten Messvorrichtung (120, 120a) eine zweite Schichtdickenmessung der Mehrzahl von Schichten (1, 2, 3) in der Messzone (mz) durchführt (222).

13. Verwendung der Vorrichtung (100) nach zumindest einem der Ansprüche 1 bis 7 und/oder des Verfahrens nach zumindest einem der Ansprüche 8 bis 12 zum Bestimmen von Schichtdicken (t1, t2, t3) einer Mehrzahl von Schichten (1, 2, 3), die auf einer Oberfläche (20a) eines Körpers (20) angeordnet sind, wobei der Körper (20) und/oder die Oberfläche (20a) des Körpers (20) vorzugsweise elektrisch leitend ist/sind, wobei vorzugsweise eine oberste Schicht (3) aus der Mehrzahl von Schichten (1, 2, 3) eine Klarlackbeschichtung umfasst und wobei vorzugsweise eine zweite Schicht (2), welche benachbart zu der obersten Schicht (3) gelegen ist, eine Grundlackbeschichtung umfasst.

## Revendications

1. Dispositif (100) destiné à déterminer une épaisseur de couche (t1, t2, t3) d'une pluralité de couches (1, 2, 3) qui sont disposées sur un corps (20), dans lequel ledit dispositif (100) comprend un premier dispositif de mesure (110; 110a) qui est configuré pour déterminer (200) une épaisseur de couche (t1, t2, t3) d'au moins une couche parmi la pluralité de couches (1, 2, 3) disposées sur le corps (20) au moyen d'une ou de plusieurs mesures effectuées en utilisant le rayonnement térahertz (THz), ou TR, dans lequel le dispositif (100) comprend en outre un deuxième dispositif de mesure (120; 120a) qui est configuré pour déterminer (202) une épaisseur de couche (t3) d'au moins une couche parmi la pluralité de couches (3) du corps (20) au moyen d'une ou de plusieurs mesures effectuées sur la base d'un signal optique (OS), dans lequel ledit dispositif (100) est configuré pour déterminer (210), à l'aide du deuxième dispositif de mesure (120; 120a), une épaisseur de couche (t3) d'une couche supérieure (3) parmi la pluralité de couches (1, 2, 3), et pour déterminer (212), à l'aide du premier dispositif de mesure (110; 110a), une épaisseur de couche (t1, t2) d'au moins une des autres couches parmi la pluralité de couches (1, 2, 3) en fonction de l'épaisseur de couche (t3) d'une couche supérieure (3).

2. Dispositif (100) selon la revendication 1, dans lequel le rayonnement THz (TR) comprend au moins une composante de fréquence située dans le domaine compris entre 0,3 THz et 100 THz, de préférence dans le domaine compris entre 0,5 THz et 10 THz.

3. Dispositif (100) selon l'une quelconque des revendications précédentes, dans lequel le signal optique (OS) comprend au moins une composante de longueur d'onde située dans le domaine compris entre 1 nanomètre (Nm) et 3 micromètres (µm), de préférence dans le domaine compris entre 280 Nm et 3 µm.

4. Dispositif (100) selon l'une quelconque des revendications précédentes, dans lequel le premier dispositif de mesure (110; 110a) comprend un émetteur THz (112) qui est conçu pour émettre un signal THz (TS) à la pluralité de couches (1, 2, 3) et un récepteur THz (114) qui est conçu pour recevoir une partie réfléchie (TSR) du signal THz (TS) qui a été réfléchie par au moins une couche (1, 2, 3) parmi la pluralité de couches (1, 2, 3).

5. Dispositif (100) selon l'une quelconque des revendications précédentes, dans lequel le deuxième dispositif de mesure (120; 120a) comprend au moins l'un des éléments suivants : a) un microscope confocal (120a), b) un interféromètre à balayage de longueur d'onde (120b), c) un interféromètre à faible cohérence (120c), d) un capteur à triangulation optique (120d), e) un système confocal achromatique (120e).

6. Dispositif (100) selon l'une quelconque des revendications précédentes, dans lequel ledit dispositif (100) est configuré pour réaliser les étapes suivantes : la réalisation (220) d'une première mesure d'épaisseur de couche de la pluralité de couches (1, 2, 3) dans une première zone de mesure (mz; mz') à l'aide du premier dispositif de mesure (110; 110a), la réalisation (222) d'une deuxième mesure d'épaisseur de couche de la pluralité de couches (1, 2, 3) dans la zone de mesure (mz; mz') à l'aide du deuxième dispositif de mesure (120, 120a).

7. Dispositif (100) selon l'une quelconque des revendications précédentes, dans lequel ledit dispositif (100) comprend un système de positionnement (140) qui est conçu pour positionner au moins un élément constitutif (110, 120) du dispositif (100) par rapport à la pluralité de couches (1, 2, 3).

8. Procédé permettant de faire fonctionner un dispositif (100) destiné à déterminer une épaisseur de couche (t1, t2, t3) d'une pluralité de couches (1, 2, 3) qui sont disposées sur un corps (20), dans lequel le dispositif (100) comprend un premier dispositif de mesure (110; 110a) qui est configuré pour déterminer (200) une épaisseur de couche d'au moins une couche parmi la pluralité de couches (1, 2, 3) au moyen d'une ou de plusieurs mesures effectuées en utilisant le rayonnement térahertz (THz), ou TR, dans lequel le dispositif (100) comprend en outre un deuxième dispositif de mesure (120; 120a) qui est configuré pour déterminer (202) une épaisseur de couche d'au moins une couche parmi la pluralité de couches (1, 2, 3) au moyen d'une ou de plusieurs mesures effectuées sur la base d'un signal optique (OS), dans lequel ledit procédé comprend : la détermination (200) d'une épaisseur de couche (t3) de la couche supérieure (3) parmi la pluralité de couches (1, 2, 3) à l'aide du deuxième dispositif de mesure (120; 120a), et la détermination (212) d'une épaisseur de couche (t1, t2) d'au moins une des autres couches parmi la pluralité de couches (1, 2) effectuée à l'aide du premier dispositif de mesure (110; 110a) en fonction de l'épaisseur de couche (t3) de la couche supérieure (3).

9. Procédé selon la revendication 8, dans lequel a) le rayonnement THz (TR) comprend au moins une composante de fréquence située dans le domaine compris entre 0,3 THz et 100 THz, de préférence dans le domaine compris entre 0,5 THz et 10 THz et/ou b) le signal optique (OS) comprend au moins une composante de longueur d'onde située dans le domaine compris entre 1 nanomètre (Nm) et 3 micromètres (µm), de préférence dans le domaine compris entre 280 Nm et 3 µm.

10. Procédé selon l'une quelconque des revendications 8 ou 9, dans lequel le premier dispositif de mesure (110; 110a) comprend un émetteur THz (112) qui est conçu pour émettre un signal THz (TS) à la pluralité de couches (1, 2, 3) et un récepteur THz (114) qui est conçu pour recevoir une partie réfléchie (TSR) du signal THz (TS) qui a été réfléchie par au moins une couche (1, 2, 3) parmi la pluralité de couches (1, 2, 3), le dispositif (100) stockant au moins de manière temporaire la partie réfléchie (TSR).

11. Procédé selon l'une quelconque des revendications 8 à 10, dans lequel le dispositif (100) utilise au moins l'un des éléments suivants en tant que deuxième dispositif de mesure (120) : a) un microscope confocal (120a), b) un interféromètre à balayage de longueur d'onde (120b), c) un interféromètre à faible cohérence (120c), d) un capteur à triangulation optique (120d), e) un système confocal achromatique (120e).

12. Procédé selon l'une quelconque des revendications 8 à 11, dans lequel le dispositif (100) réalise (220), à l'aide du premier dispositif de mesure (110; 110a), une première mesure d'épaisseur de couche de la pluralité de couches (1, 2, 3) dans une première zone de mesure (mz) et réalise (222), à l'aide du deuxième dispositif de mesure (120, 120a), une deuxième mesure d'épaisseur de couche de la pluralité de couches (1, 2, 3) dans la zone de mesure (mz) .

13. Utilisation du dispositif (100) selon l'une quelconque des revendications 1 à 7 et/ou du procédé selon l'une quelconque des revendications 8 à 12 en vue de déterminer des épaisseurs de couche (t1, t2, t3) d'une pluralité de couches (1, 2, 3) qui sont disposées sur une surface (20a) d'un corps (20), dans laquelle le corps (20) et/ou la surface (20a) du corps (20) sont de préférence électroconducteurs, dans laquelle une couche supérieure (3) parmi la pluralité de couches (1, 2, 3) comprend de préférence un revêtement en vernis transparent et dans laquelle une deuxième couche (2) qui est contiguë à la couche supérieure (3) comprend de préférence un revêtement de fond.
